# EUROPEAN PATENT SPECIFICATION

(11) **EP 2 308 745 B1**
(45) Date of publication and mention of the grant of the patent: **27.06.2012**
(21) Application number: 09172439.3
(22) Date of filing: 07.10.2009
(51) Int. Cl.: B62D 61/12, B60G 9/00

(54) **Lifting device for an additional axle of a vehicle**
Hebevorrichtung für zusätzliche Achsen von Fahrzeugen
Dispositif de levage pour essieu supplémentaire d'un véhicule

(43) Date of publication of application: 13.04.2011
(73) Proprietor: IVECO MAGIRUS AG, 89079 Ulm (DE)
(72) Inventor: Baur, Guenter, 73340, AMSTETTEN (DE); Kaiser, Markus, 89075, ULM (DE); Köberle, Florian, 89077, ULM (DE)
(74) Representative: Borsano, Corrado

(56) References cited:
- EP-A1- 0 120 332
- DE-C1- 3 807 273
- US-A- 4 501 437
- US-A- 4 854 409
- US-A1- 2007 108 711

## Description

The present invention concerns a lifting device for an additional axle of a vehicle, in particular a heavy goods vehicle, with an air bellows resting on the vehicle chassis for lifting the axle body.

Lifting devices of this type serve to lift a non-driven additional axle of a vehicle as required, so that the vehicle weight is carried solely by the remaining axles. This reduces wear and tear on the additional axle and related parts, especially the tyres. With respect to the additional axle of the present type, it may be either a pusher axle or a trailing axle of a driven vehicle axle. The additional axle is lifted by means of a pneumatically driven air bellows which rests on the vehicle chassis, which allows it to lift the axle body relative to the chassis. European patent application EP 1 911 605 A1, for example, illustrates air bellows of this type, which rest on a bearing element extending downwards from the actual vehicle chassis. A lever connected to the axle body, extending essentially in the longitudinal direction of the vehicle, rests on the air bellows. When the air bellows expands, the lever is pivoted upwards in the direction of the chassis, and lifts the axle body.

The essential parts of this prior art lifting device are disposed underneath the vehicle chassis, i.e. in the area within which the vehicle drive shaft extends, amongst other things. To create space for the drive shaft to pass through, the relevant construction elements of the lifting device have to be positioned to the side, along the edge portion of the chassis. Thus far, therefore, it has always been necessary to provide, on a corresponding bearing, an air bellows at each axle end to lift a lever on that axle side. This results in undesirable complexity, extra weight and additional costs. Further, the construction height of the prior art lifting devices in the area underneath the chassis is considerable.

An example of lifting device is gived by US4501473, whose features are disclosed in the preamble of claim 1.

Hence the task of this invention is to provide a simplified lifting device of the aforementioned type, capable of overcoming the above-mentioned disadvantages.

According to the invention, this task is solved by a lifting device with the features of claim 1.

According to the invention, only a single air bellows is provided, which is disposed in the centre of the vehicle chassis in relation to the lateral direction of the vehicle, where it rests on a chassis cross-strut. The top part of the air bellows, which can be lifted and lowered by a pneumatic drive, is connected by means of traction to the axle body disposed underneath. Further, one end of a rocker bar extending in the longitudinal direction of the vehicle rests on the air bellows and is connected by its other end to the chassis by means of a joint element such that it can pivot around a horizontal axis.

The bearing on which the air bellows rests is formed in this case by the chassis cross-strut, which can extend between two chassis longitudinal supports at their height level. Hence no bearing element extending downards from the chassis is required for the air bellows. The raised position of the air bellows makes it possible to deploy one air bellows only, and to position it in the centre of the vehicle, above the drive shaft. Whilst the connection with the axle body is provided by the means of traction, the rocker bar serves to guide the upwards and downwards movement of the air bellows in the lateral direction. All in all, the construction according to the invention is less complex and more compact than the prior art lifting device. According to a preferred embodiment of the lifting device according to the invention, the rocker bar is connected by its articulated end to the centre of a second chassis cross-strut.

The traction means are disposed on each side of the air bellows and extend downwards from the end of the rocker bar which rests on the air bellows.

The traction means comprise an approximately vertical arm, whose upper end is pivotally connected to the side of the resting end of the rocker bar, and a clamping plate, of which one end pointing to the inside of the vehicle chassis is pivotally connected to the bottom end of the arm, and the remaining end is connected to the axle body.

The traction means preferably extend through openings in the first chassis cross-strut on which the air bellows rests.

The end of clamping plate connected to the axle body may rest on the axle body and be provided with an end stop for an absorbing element such as a rubber buffer mounted on the underside of the vehicle chassis. There is also the option of mounting a support bellows on this outer end of the clamping plate, which is attached to the side of the vehicle chassis.

Further, the arms are preferably each connected with the rocker bar and the clamping plates by means of joint elements with horizontal articulated axes.

According to another preferred embodiment, the rocker bar points from the air bellows forward in the direction of travel of the vehicle towards the second chassis cross-strut to which the rocker bar is pivotally connected.

A preferred embodiment of the invention will be described in more detail below, with reference to the drawings, in which:
- Fig. 1: is a perspective view of an embodiment of the lifting device according to the invention;

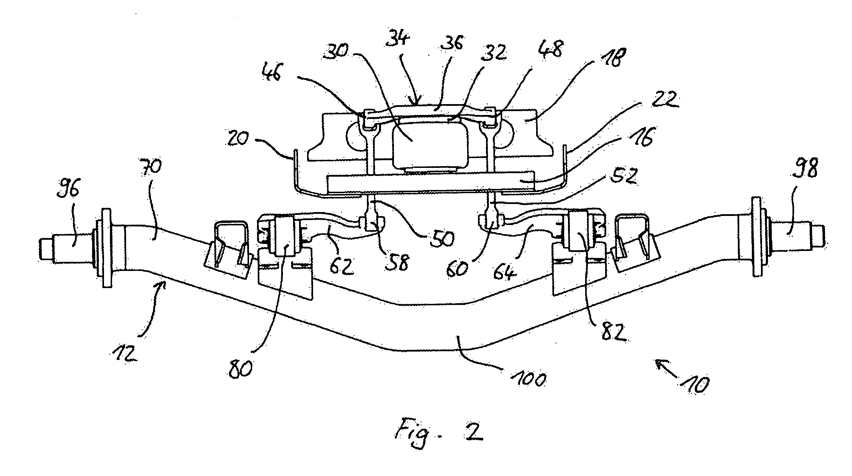

- Fig. 2: is a rear view of the lifting device of Fig. 1, looking in the direction of travel of the vehicle;

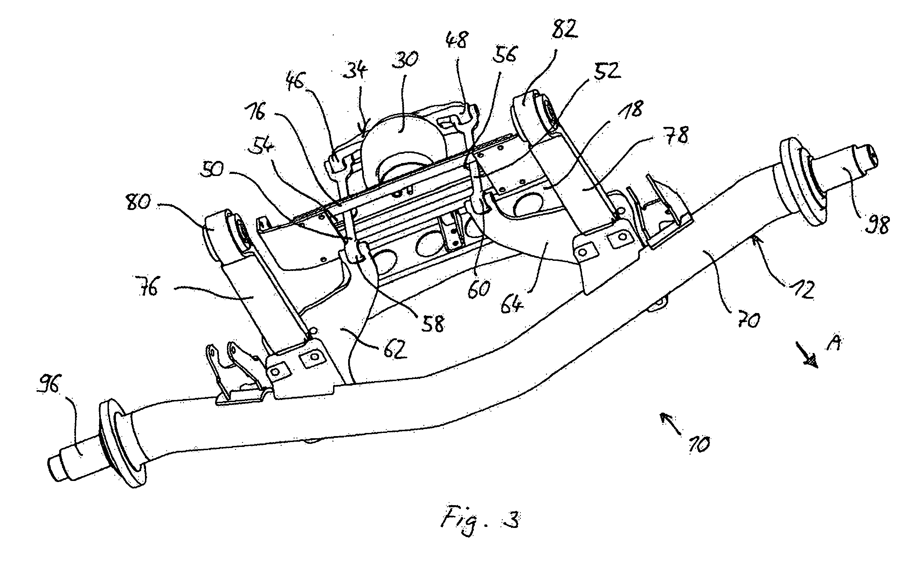

- Fig. 3: is a perspective view of the lifting device of Fig. 1 and 2 seen from below; and
- Fig. 4 to 6: show side views of the embodiment of the lifting device illustrated in Fig. 1 to 3 in various lifting states.

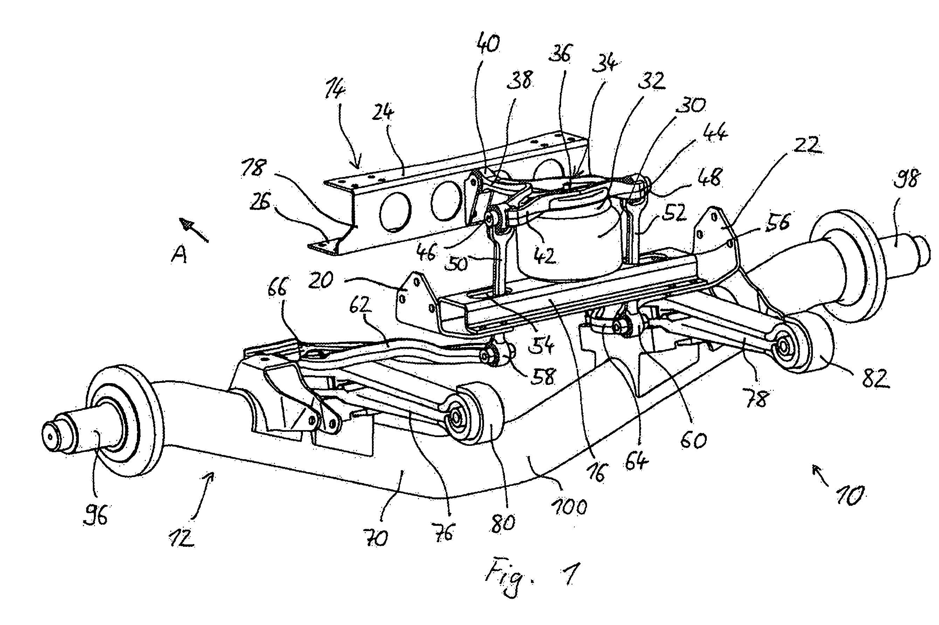

Fig. 1 shows a lifting device, referenced as 10, for an offset additional axle 12 of a vehicle. This vehicle is, in particular, a heavy goods vehicle with several axles, of which the pusher axle 12 shown here is a non-driven axle disposed in front of a driven axle. Pusher axle 12 can be lifted by the lifting device 10 of the invention into a position in which it is distanced from the road, and the vehicle weight is supported entirely by the remaining axles. In a lowered position of the lifting device, the vehicle weight is distributed across all axles, including pusher axle 12.

The top portion of Fig. 1 shows parts of vehicle chassis 14, namely a chassis cross-strut 16 and another chassis cross-strut 18 which is offset towards the front in the direction of travel (arrow A). The first chassis cross-strut 16 and the second chassis cross-strut 18 connect two vehicle chassis longitudinal supports not shown in more detail. This connection is created by means of corresponding side flanges 20,22 and 24,26 on chassis cross-struts 16,18.

Resting on the first chassis cross-strut 16 at the rear in relation to the direction of travel there is an air bellows 30 disposed centrally on top of first chassis cross-strut 16. Air bellows 30 therefore sits in the centre of the vehicle chassis in relation to the lateral direction of the vehicle. On its top side, air bellows 30 is closed by a round end plate 32. By means of pneumatic connections not shown in more detail, air bellows 30 can be inflated with compressed air, or air can be removed from it so that upper end plate 32 can be raised or lowered.

Disposed on top of end plate 32 of air bellows 30 there is a rocker bar 34 extending in the longitudinal direction of the vehicle. The rear end 36 of rocker bar 34 rests on upper end plate 32 and hence on top of air bellows 30. The other end 38 of rocker bar 34 is connected via a joint element 40 with the front second chassis cross-strut 14. The articulated axis of this joint element 40 is horizontal so that rocker bar 34 can be pivoted around this joint element 40 in a vertical plane, and the end 36 of rocker bar 34 resting on air bellows 30 can follow the upwards and downwards movement of air bellows 30. Rocker bar 34 stabilises air bellows 30, in particular its lifted or lowered part, during lifting and lowering.

The end 36 of rocker bar 34 resting on end plate 32 widens out at the sides so that the plate of rocker bar 34 is triangular or T-shaped overall. The lateral ends 42 and 44 of rocker bar 34 are connected via joint elements 46,48 with arms 50,52, which stand essentially upright and extend downwards through openings 54,56 in the first chassis cross-strut 16.

The bottom ends of arms 50,52 are in turn connected via further joint elements 58,60 to clamping plates 62,64, which extend from a resting point 66,68 on axle body 70 of pusher axle 12. Resting points 66,68 on both sides of axle body 70 are positioned relative to the lateral direction of the vehicle approximately underneath the chassis longitudinal supports and serve, in the present embodiment, as end stops for rubber buffers attached to the undersides of the chassis longitudinal supports. A construction variation in which supporting bellows are mounted on resting points 66,68 and are laterally connected by their upper ends to chassis longitudinal supports is also conceivable. Another part of the axle suspension is created by a shock absorber which directly connects axle body 70 with a chassis longitudinal support and is disposed behind the supporting bellows relative to the direction of travel.

The principles of this type of axle suspension and shock absorption are already known and are not, therefore, part of the subject-matter of this invention. The outer ends of respective clamping plates 62,64 therefore rest on axle body 70, whilst the inner ends of clamping plates 62,64 are provided with joint elements 58,60 for connecting arms 50,52. Both articulated axes 46,48 and 58,60 of arms 50,52 are horizontally positioned.

Together with clamping plates 62,64, arms 50,52 form traction means for connecting the top liftable and lowerable part of air bellows 30 with axle body 70. If air bellows 30 is inflated with air, and its upper part is raised as a result, top end plate 32 rises together with the corresponding resting end 36 of rocker bar 34, whilst rocker bar 34 is simultaneously pivoted upwards around joint element 40 towards the vehicle chassis. During this movement, arms 50,52 pull axle body 70 upwards via clamping plates 62,64, so that it is lifted towards the vehicle chassis.

Also part of the suspension of pusher axle 12 is a suspension spring 76,78 pointing rearward from axle body 70 of pusher axle 12 on each side of the vehicle, which has, at its rear end, a joint element 80,82 for connecting with a suspension sword which points downward from the vehicle chassis. The forward pointing ends of suspension springs 76,78 rest directly on axle body 70 underneath the outward pointing ends of respective clamping plates 62,64.

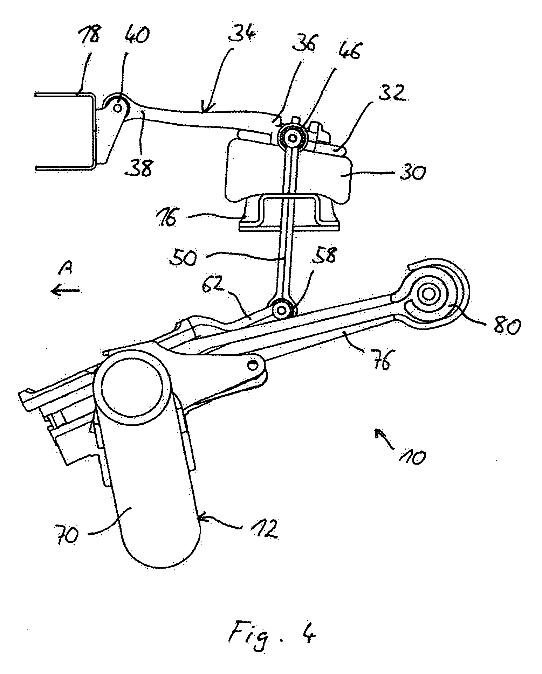

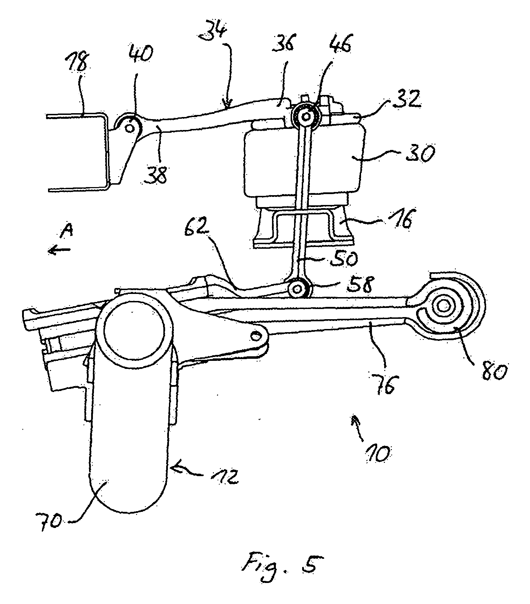

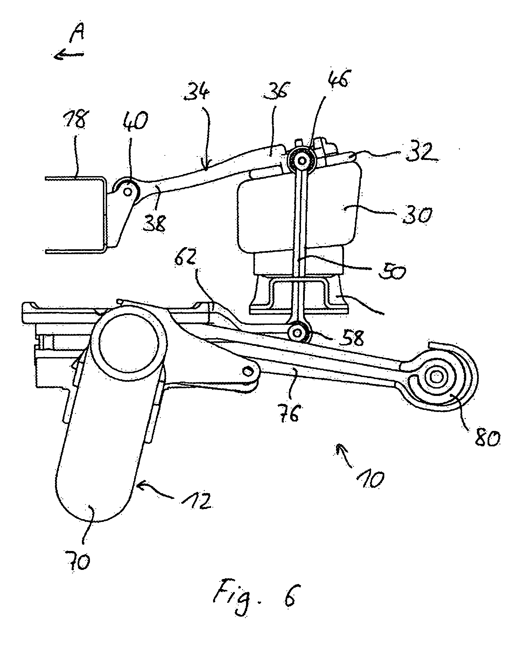

Via the articulated connection with the suspension sword, suspension springs 76,78 can be pivoted up and down. In the state in which pusher axle 12 is lowered and weight-bearing, pusher axle 12 can be laterally guided by suspension springs 76,78 during outward and inward spring deflection movements which are supported by supporting bellows and absorbed by the shock absorber. This guidance is also, however, provided during the lifting movement of air bellows 30 to lift pusher axle 12 into the non-loaded state. Figures 4 to 6 show three different lifting positions of pusher axle 12 in relation to the chassis frame. The rocker movement of suspension springs 76,78 is clearly recognisable in these Figures, as is the movement of rocker bar 34 on air bellows 30.

The offset axle body 70 of pusher axle 12 has a lowered middle section 100 relative to the outer ends 96,98 of pusher axle 12. The construction according to the invention provides space for passing a vehicle drive shaft between axle body 70 and the first chassis cross-strut 16. In the present construction, air bellows 30 for lifting and lowering axle body 70 may therefore be disposed centrally above the drive shaft, and the traction means for lifting axle body 70 may be disposed to the side of air bellows 30. This delivers substantial construction benefits.

## Claims

1. A lifting device (10) for an additional axle (12) of a vehicle, in particular a heavy goods vehicle, with an air bellows (30) resting on the vehicle chassis, for lifting axle body (70), a single air bellows (30) rests on a first chassis cross-strut (16) in the middle of the vehicle chassis relative to the lateral direction of the vehicle, and lifting device (10) further comprises traction means for connecting the upper part of air bellows (30) with axle body (70), the traction means being disposed on both sides of air bellows (30), the lifting device (10) being **characterised in that** it comprises a rocker bar (34) extending in the longitudinal direction of the vehicle, which rests with a first end (36) on air bellows (30) and whose second end (38) is connected to the chassis by means of a joint element (40) such that it can be pivoted around a horizontal axis
and **in that** the traction means respectively comprise an approximately vertical arm (50,52) whose upper end is laterally connected to the first end (36) of rocker bar (34), and a clamping plate (62,64), of which one end pointing to the inside of the vehicle chassis is pivotally connected to the bottom end of said approximately vertical arm (50,52) and the remaining end is connected to axle body (70).

2. The lifting device of claim 1, **characterised in that** rocker bar (34) is connected by its articulated end (38) to the centre of a second chassis cross-strut (18).

3. The lifting device of claim 1 or 2, **characterised in that** the traction means extend through openings (54,56) in the first chassis cross-strut (16).

4. The lifting device of claim 3, **characterised in that** arms (50,52) are connected to rocker bar (34) and clamping plates (62,64) by means of joint elements (46,48,58,60) with horizontal articulated axes.

5. The lifting device of one of the preceding claims, **characterised in that** rocker bar (34), starting out from air bellows (30), points forwards towards second chassis cross-strut (18) in the direction of travel of the vehicle.

6. The lifting device of claims 4 or 5, **characterised in that** further comprises a suspension spring (76,78) pointing rearward from axle body (70) of additional axle (12) on each side of the vehicle, having at its rear end, a joint element (80, 82) for connecting with a suspension sword which points downwards from the vehicle chassis and a forward pointing end resting directly on axle body (70) underneath the outward pointing ends of respective clamping plates (62,64).

## Patentansprüche

1. Hubvorrichtung (10) für eine zusätzliche Achse (12) eines Fahrzeugs, insbesondere eines Schwerlastfahrzeugs, mit einem Luftbalg (30), der auf dem Fahrzeugchassis aufliegt, zum Anheben eines Achskörpers (70), wobei ein einzelner Luftbalg (30) auf einer ersten Chassisquerstrebe (16) in der Mitte des Fahrzeugchassis in Bezug auf die Querrichtung des Fahrzeugs aufliegt, und die Hubvorrichtung (10) darüber hinaus Zugmittel zum Verbinden des oberen Teils des Luftbalgs (30) mit dem Achskörper (70) umfasst, wobei die Zugmittel auf beiden Seiten des Luftbalgs (30) angeordnet sind, wobei die Hubvorrichtung (10) **dadurch gekennzeichnet ist, dass** sie einen Schwingarm (34) umfasst, der sich in der Längsrichtung des Fahrzeugs erstreckt und mit einem ersten Ende (36) auf dem Luftbalg (30) aufliegt, und dessen zweites Ende (38) mit dem Chassis mittels eines Gelenkelements (40) verbunden ist, sodass er um eine horizontale Achse verschwenkt werden kann,
und **dadurch**, dass die Zugmittel jeweils einen annähernd vertikalen Arm (50, 52), dessen oberes Ende seitlich mit dem ersten Ende (36) des Schwingarms (34) verbunden ist, und eine Klemmplatte (62, 64) umfassen, von der ein Ende, das zu der Innenseite des Fahrzeugchassis zeigt, schwenkbar mit dem unteren Ende des annähernd vertikalen Arms (50, 52) verbunden ist, und das verbleibende Ende mit dem Achskörper (70) verbunden ist.

2. Hubvorrichtung nach Anspruch 1,
**dadurch gekennzeichnet, dass**
der Schwingarm (34) mit seinem angelenkten Ende (38) mit der Mitte der zweiten Chassisquerstrebe (18) verbunden ist.

3. Hubvorrichtung nach Anspruch 1 oder 2,
**dadurch gekennzeichnet, dass**
sich die Zugmittel durch Öffnungen (54, 56) in der ersten Chassisquerstrebe (16) erstrecken.

4. Hubvorrichtung nach Anspruch 3,
**dadurch gekennzeichnet, dass**
die Arme (50, 52) mit dem Schwingarm (34) und den Klemmplatten (62, 64) mittels Gelenkelementen (46, 48, 58, 60) mit horizontal angelenkten Achsen verbunden sind.

5. Hubvorrichtung nach einem der vorhergehenden Ansprüche,
**dadurch gekennzeichnet, dass**
der Schwingarm (34) ausgehend von dem Luftbalg (30) nach vorne in Richtung der zweiten Chassisquerstrebe (18) in der Bewegungsrichtung des Fahrzeugs zeigt.

6. Hubvorrichtung nach Anspruch 4 oder 5,
**dadurch gekennzeichnet, dass**
sie ferner eine Tragfeder (76, 78) umfasst, die von dem Achskörper (70) der zusätzlichen Achse (12) auf jeder Seite des Fahrzeugs nach hinten zeigt und an ihrem hinteren Ende ein Gelenkelement (80, 82) zum Verbinden mit einem Aufhängungsschwert aufweist, das von dem Fahrzeugchassis nach unten zeigt, und ein nach vorne zeigendes Ende, das direkt auf dem Achskörper (70) unterhalb der nach außen hin zeigenden Enden der jeweiligen Klemmplatten (62, 64) aufliegt.

## Revendications

1. Dispositif de levage (10) pour un essieu supplémentaire (12) d'un véhicule, en particulier un poids-lourd, avec un soufflet à air (30) reposant sur le châssis du véhicule, pour lever le corps d'essieu (70), un seul soufflet à air (30) repose sur un premier croisillon de châssis (16) au milieu du châssis de véhicule par rapport à la direction latérale du véhicule, et le dispositif de levage (10) comprend en outre un moyen de traction permettant de raccorder la partie supérieure du soufflet à air (30) au corps d'essieu (70), le moyen de traction étant disposé sur les deux côtés du soufflet à air (30), le dispositif de levage (10) étant **caractérisé en ce qu'**il comprend une biellette (34) s'étendant dans la direction longitudinale du véhicule, qui repose avec une première extrémité (36) sur le soufflet à air (30) et dont la seconde extrémité (38) est raccordée au châssis au moyen d'un élément d'assemblage (40) de sorte qu'il peut être pivoté autour d'un axe horizontal
et **en ce que** le moyen de traction comprend respectivement un bras approximativement vertical (50, 52) dont l'extrémité supérieure est raccordée de façon latérale à la première extrémité (36) de la biellette (34) et une plaque de serrage (62, 64), dont une extrémité dirigée vers l'intérieur du châssis de véhicule est raccordée de façon pivotante à l'extrémité inférieure dudit bras approximativement vertical (50, 52) et l'extrémité restante est raccordée au corps d'essieu (70).

2. Dispositif de levage selon la revendication 1, **caractérisé en ce que** la biellette (34) est raccordée par son extrémité articulée (38) au centre d'un second croisillon de châssis (18).

3. Dispositif de levage selon la revendication 1 ou 2, **caractérisé en ce que** le moyen de traction s'étend à travers des ouvertures (54, 56) dans le premier croisillon de châssis (16).

4. Dispositif de levage selon la revendication 3, **caractérisé en ce que** les bras (50, 52) sont raccordés à la biellette (34) et à des plaques de serrage (62, 64) au moyen d'éléments d'assemblage (46, 48, 58, 60) avec des axes articulés horizontaux.

5. Dispositif de levage selon l'une quelconque des revendications précédentes, **caractérisé en ce que** la biellette (34), partant du soufflet à air (30) est dirigée vers l'avant vers le second croisillon de châssis (18) dans la direction de déplacement du véhicule.

6. Dispositif de levage selon les revendications 4 ou 5, **caractérisé en ce qu'**il comprend en outre un ressort de suspension (76, 78) dirigé vers l'arrière depuis le corps d'essieu (70) de l'essieu supplémentaire (12) sur chaque côté du véhicule, ayant sur son extrémité arrière un élément d'assemblage (80, 82) permettant de le raccorder avec une épée de suspension qui est dirigée vers le bas depuis le châssis de véhicule et une extrémité dirigée vers l'avant reposant directement sur le corps d'essieu (70) sous les extrémités dirigées vers l'extérieur de plaques de serrage (62, 64) respectives.
